# FASCICULE DE BREVET EUROPEEN

(11) **EP 1 972 978 B1**
(45) Date de publication et mention de la délivrance du brevet: **04.03.2015**
(21) Numéro de dépôt: 08152663.4
(22) Date de dépôt: 12.03.2008
(51) Int. Cl.: G02B 6/44

(54) **CABLE OPTIQUE DE RACCORDEMENT A UN RESEAU DE DISTRIBUTION GENERAL ET PROCEDE DE RACCORDEMENT DUDIT CABLE**
Optisches Kabel zum Anschluss an ein allgemeines Verteilernetz und Anschlussverfahren dieses Kabels
Optical cable for connecting to a general distribution network and method of connecting said cable

(30) Priorité: 16.03.2007 FR 0753876
(43) Date de publication de la demande: 24.09.2008
(73) Titulaire: Nexans, 75008 Paris (FR)
(72) Inventeur: Halvenstein,Réal, 7022 Harmignes (BE)
(74) Mandataire: Feray, Valérie

(56) Documents cités:
- EP-A- 1 469 329
- EP-A1- 1 052 533
- WO-A-98/58465
- WO-A-03/056576
- US-A- 6 167 178

## Description

La présente invention se rapporte à un câble optique de raccordement à un réseau de distribution général ainsi qu'à un procédé de raccordement dudit câble.

L'invention s'applique typiquement, mais non exclusivement, au domaine des câbles optiques destinés à raccorder une pluralité de points d'alimentation audit réseau de distribution général.

Les points d'alimentation peuvent par exemple être localisés chez des abonnés ou dans des boîtes de dérivation destinées à alimenter un réseau de dérivation.

On connaît du document FR2887639 une structure d'un câble optique 1 telle que représentée sur la figure 1.

Le câble optique 1 comprend des modules principaux 11, 12, 13, 14 de fibres optiques, l'ensemble desdits modules étant entouré par une enveloppe de protection 2a fermée de section circulaire et présentant une surface interne 2b.

Chaque module principal 11, 12, 13, 14 comprend une gaine externe 110 et une pluralité de fibres optiques 111 contenues dans la gaine externe 110, ladite gaine externe 110 étant formée en un matériau présentant un faible coefficient de frottement dynamique.

Les modules principaux de fibres optiques sont agencés à l'intérieur de l'enveloppe de protection 2a de manière à ce qu'ils disposent d'un jeu suffisant destiné à faciliter leur extraction.

Le jeu est tel que l'aire de la somme des sections de l'ensemble des modules principaux de fibres optiques contenus dans l'enveloppe de protection 2a est inférieure à 75% de l'aire de la section de la surface interne 2b de l'enveloppe de protection.

Ces caractéristiques permettent de faciliter l'extraction de chaque module principal 11, 12, 13, 14 du câble optique 1 et le poussage du module principal dans une microconduite jusqu'au point de connexion sur une grande longueur.

Le procédé typique de raccordement au moyen de ce câble optique est également décrit dans le document FR2887639.

Selon une première étape, une première ouverture est pratiquée dans l'enveloppe de protection 2a au niveau d'une première zone à l'aide d'un outil dédié. La première ouverture permet d'accéder aux modules principaux 11, 12, 13, 14 de fibres optiques contenus dans l'enveloppe de protection 2a.

L'un des modules principaux 11 de fibres optiques que l'on souhaite dévier vers un point d'alimentation est sélectionné puis est sectionné à proximité de la première ouverture.

Selon une deuxième étape, une deuxième ouverture est pratiquée dans l'enveloppe de protection 2a au niveau d'une deuxième zone, distante de la première zone le long du câble optique 1.

Selon une troisième étape, une portion dudit module principal 11 est prélevée. A cet effet, on tire le module principal 11 à travers la deuxième ouverture de manière à extraire la portion sectionnée de module principal 11.

Selon une quatrième étape, la portion du module principal 11 est insérée dans une microconduite par poussage, tirage ou soufflage dans la microconduite pré-installée.

La microconduite s'étend entre la conduite principale dans laquelle est posé le câble optique 1 et un point d'alimentation chez l'abonné ou dans une boîte de dérivation.

Toutefois, lors de la troisième étape de raccordement décrite ci-avant, l'agencement des modules principaux 11, 12, 13, 14 de fibres optiques à l'intérieur de l'enveloppe de protection 2a du câble optique 1, présente l'inconvénient de s'entremêler et de se coincer malgré la présence de la gaine externe 110 à faible coefficient de friction dynamique.

De plus, la moindre infiltration à l'intérieur du câble optique 1, notamment par l'endommagement de l'enveloppe de protection 2a, peut causer un préjudice certain à l'extraction desdits modules principaux.

En effet, l'infiltration, par exemple de boues, à l'intérieur du câble optique 1 entraîne généralement l'agrégation des modules principaux 11, 12, 13, 14 de fibres optiques rendant ainsi difficile leur extraction.

Par conséquent, il devient très difficile d'extraire un module principal de fibres optiques sur une longue distance, d'effectuer de multiples extractions de différents modules principaux de fibres optiques à l'intérieur du même câble optique et donc de les raccorder facilement à un point d'alimentation.

Le document WO98/58465 décrit un câble optique comprenant des modules de fibres optiques, où les procédés de bouclage d'extrêmité et de double extraction sont appliqués. Cependant, le procédé de raccordement des câbles optiques, dit procédé de « piquage », tel que décrit dans le document FR2887639, et dans le document WO98/58465, n'est pas optimisé au niveau du nombre des opérations de raccordement.

Aussi le problème technique à résoudre, par l'objet de la présente invention, est de proposer un câble optique comprenant un ou des modules principaux de fibres optiques comprenant des fibres optiques et une gaine externe, les fibres optiques de chaque module principal étant entourées par ladite gaine externe, et une enveloppe de protection entourant le ou lesdits modules principaux de fibres optiques, ledit câble optique permettant d'éviter les problèmes de l'état de la technique.

La solution du problème technique posé réside, selon la présente invention, en ce que ledit câble optique comprend en outre un câble optique interne à l'intérieur de ladite enveloppe de protection, ledit câble optique interne comprenant au moins un module interne de fibres optiques et une couche externe entourant le ou les module(s) interne(s), optiques, et en ce que au moins un module interne de fibres optiques du câble optique interne est connecté à au moins un des modules principaux de fibres optiques du câble optique.

On entend par module principal tout module de fibres optiques pouvant être extrait du câble optique sur de grandes longueurs, par exemple jusqu'à une centaine de mètres, à des fins de raccordement à des points d'alimentation localisés par exemples chez des abonnés ou dans des boîtes de dérivation destinées à alimenter un réseau de dérivation.

L'extrémité du câble optique interne peut ainsi être connectée aux modules principaux de fibres optiques par un moyen de connexion, permettant ainsi un « bouclage d'extrémité » pour extraire deux fois (double extraction) une portion différente d'un même module principal lors des opérations de raccordement à des points d'alimentation.

A une extrémité du câble, les fibres optiques des modules internes du câble interne peuvent ainsi être avantageusement connectées aux fibres optiques des modules principaux du câble optique pour assurer la continuité de la transmission optique dans ledit câble optique. En d'autres termes, ceci constitue un bouclage d'extrémité.

A titre d'exemple, le moyen de connexion entre les modules principaux et internes peut s'effectuer par soudage ou au moyen d'un connecteur mécanique.

Dans un mode de réalisation particulièrement préféré, le câble optique comprend en outre n modules principaux de fibres optiques, n étant un entier tel que 1 ≤ n ≤ 3, disposés à l'intérieur d'un tube qui leur est propre, lesdits n modules principaux étant libres à l'intérieur dudit tube, et un élément porteur à l'intérieur de ladite enveloppe de protection, chacun desdits tubes étant immobilisé entre ledit élément porteur et ladite enveloppe de protection.

Avantageusement, les n modules principaux de chaque tube sont isolés des n autres modules principaux de fibres optiques, ou en d'autres termes chaque tube isole ses n modules principaux des n modules principaux des autres tubes, ce qui limite de façon significative le risque d'enchevêtrement des modules principaux lors de leur raccordement aux points d'alimentation.

Les tubes protègent également les n modules principaux de toute agrégation pouvant être provoquée par des infiltrations de boues à l'intérieur du câble optique et garantissent ainsi une extraction optimisée desdits n modules principaux.

De plus, chaque module principal peut glisser à l'intérieur du tube et être extrait facilement dudit tube puisque les n modules principaux sont agencés dans la cavité du tube avec un jeu suffisant.

En outre, l'élément porteur permet d'organiser la disposition des tubes autour dudit élément afin d'avoir un accès facile et rapide auxdits tubes lors du raccordement des modules principaux.

Enfin, l'immobilisation des tubes a l'avantage de faciliter l'extraction des n modules principaux à l'intérieur de chaque tube.

Le raccordement des modules principaux de fibres optiques à différents points d'alimentation en est ainsi facilité.

Avantageusement, n est égal à 1, ou en d'autres termes, chacun des modules principaux de fibres optiques est disposé à l'intérieur d'un tube qui lui est propre.

Ainsi, chaque module principal de fibres optiques est totalement isolé des autres modules principaux de fibres optiques, ce qui les empêche de s'enchevêtrer lors de leur raccordement.

L'extraction des modules principaux de fibres optiques est alors optimisée de façon significative.

Dans un mode de réalisation particulier, l'aire de section du ou des modules principaux est inférieure à 80% de l'aire de la section de la surface interne du tube.

Les n modules principaux peuvent ainsi être facilement extraits de leur tube, notamment par un procédé de soufflage.

Dans autre mode de réalisation particulier, le ou les tubes sont toronnés autour de l'élément porteur.

Tout type de configuration, ou en d'autres termes tout type de toronnage, bien connue de l'homme du métier peut être employée, notamment une configuration dite hélicoïdale de type S ou Z ou une configuration dite d'oscillation inversée de type S-Z.

La configuration du ou des tubes autour de l'élément porteur de type S-Z est particulièrement préférée puisqu'elle permet un accès plus facile et plus rapide aux différents tubes autour de l'élément porteur.

Selon une variante, l'élément porteur est un élément de renforcement permettant d'avoir une bonne tenue mécanique du câble optique.

Par exemple, l'élément de renforcement est du type joncs composites (FRP pour « Fiber renforced plastics ») ou métalliques, gainés ou non.

Selon l'invention, l'élément porteur peut également être lui-même ledit câble optique interne, et les modules principaux de fibres optiques sont notamment les modules intercalés entre le câble optique interne et l'enveloppe de protection du câble optique.

Selon une autre variante, l'élément porteur peut également être soit une fibre optique, soit un module principal ou interne, soit un tube contenant ou non au moins une fibre optique ou un module, ces différents types d'élément porteur étant tels que décrits dans la présente description.

Dans un mode de réalisation préféré, l'ensemble des modules principaux entourant ledit élément porteur du type fibre optique, module ou tube peuvent être maintenus par des joncs composites (FRP) ou métalliques, pour renforcer la structure du câble optique.

Dans un autre mode de réalisation préféré, le tube est composé d'un polybutylène téréphthalate (PBT) et d'un polycarbonate (PC).

Toutefois, le matériau dudit tube n'est nullement limité à ce type de polymère et peut être composé d'autres polymères thermoplastiques stables thermiquement.

En outre, le tube peut être composé avantageusement d'un agent colorant et/ou d'inscriptions sur sa surface externe permettant de faciliter la sélection des tubes de manière visuelle lors du raccordement des modules principaux.

Ainsi, l'agent colorant, comme lesdites inscriptions, ne modifie nullement l'intégrité des modules principaux de fibres optiques.

Dans un autre mode de réalisation particulier, la gaine externe du module principal est composée d'un matériau polymère chargé pour pouvoir être déchirable facilement.

Le polymère peut être par exemple une polyoléfine, notamment un polymère et/ou copolymère d'éthylène, ou un polyester.

Dans un autre mode de réalisation, l'enveloppe de protection comprend au moins une couche en un matériau du type polyoléfine, polyester ou polyamide.

Selon une variante, l'enveloppe de protection comprend une couche externe et une couche interne.

De préférence, la couche externe se compose d'un polyéthylène haute densité et la couche interne se compose de mèches de maintien, lesdites mèches de maintien pouvant être du type polyester ou aramide.

En outre, une couche intermédiaire de type armure, par exemple en acier corrugué, peut être intercalée entre la couche externe et la couche interne.

Typiquement, les différentes couches constitutives de l'enveloppe de protection doivent être facilement coupées pour pouvoir accéder aux tubes.

Un autre objet de la présente invention est un procédé de raccordement au moyen d'un câble optique selon la présente invention, comprenant les étapes suivantes :
- sélectionner un tube du câble optique et le sectionner au niveau d'une première zone dudit câble, puis sectionner un module principal dudit tube au niveau de la première zone,
- sectionner ledit tube au niveau d'une deuxième zone du câble, la deuxième zone étant distante de la première zone,
- extraire, au niveau de la deuxième zone, la portion sectionnée du module principal du tube qui lui est propre par soufflage, et
- raccorder un point d'alimentation au câble optique par l'intermédiaire de la portion de module principal extraite.

Dans un mode de réalisation particulièrement avantageux, l'extraction dudit module principal du tube qui lui est propre est effectuée par injection d'un flux d'air à partir de la première zone de section du tube.

Dans un mode de réalisation particulier, le procédé de raccordement comprend une étape consistant à pratiquer une ouverture dans l'enveloppe de protection au niveau de la première et/ou de la deuxième zone.

D'autres caractéristiques et avantages de la présente invention apparaîtront à la lumière de la description d'exemples non limitatifs d'un câble optique selon la présente invention faits en référence aux figures annotées, dans lesquelles :
- la figure 1 représente de manière schématique une structure d'un câble optique en coupe transversale conforme à l'art antérieur ;
- la figure 2 représente de manière schématique une structure d'un câble optique en coupe transversale ;
- la figure 3 représente de manière schématique une autre structure d'un câble optique en coupe transversale conforme à la présente invention ;
- la figure 4 représente de manière schématique une autre structure d'un câble optique en coupe transversale conforme à la présente invention ;
- la figure 5 représente de manière schématique le principe d'extraction des modules principaux de fibres optiques du câble optique de la figure 3 ou de la figure 4.

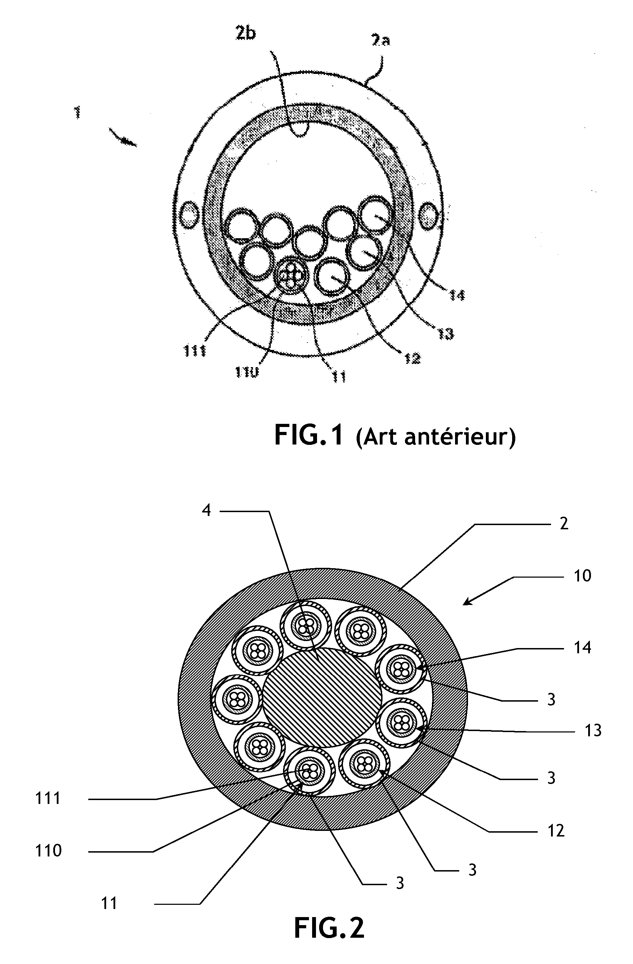

La figure 1 a déjà été décrite précédemment, et pour faciliter la compréhension, les éléments communs entre la présente invention et l'art antérieur portent les mêmes références.

La figure 2 représente la vue en coupe d'un câble optique 10.

Ce câble 10 comprend 9 modules principaux 11, 12, 13, 14 de fibres optiques et une enveloppe de protection 2 entourant lesdits modules principaux de fibres optiques.

Chaque module principal comprend une gaine externe 110 entourant des fibres optiques 111.

On entend par module principal de fibres optiques une ou plusieurs fibres optiques, de préférence entre 1 à 16, entourée par une gaine externe polymérique non nécessairement serrée autour des fibres optiques pour être facilement enlevée.

Les fibres optiques ont typiquement un diamètre de 250 µm.

Chaque module principal s'étend à l'intérieur d'un tube 3 qui lui est propre, ledit module principal étant libre à l'intérieur dudit tube.

Pour exemple, le diamètre du module principal 11 est d'environ 1,1 mm et le diamètre interne du tube 3 est d'environ 1,7 mm, l'aire de section dudit module principal étant ainsi inférieure à 80% de l'aire de la section de la surface interne dudit tube.

Le câble comprend en outre un élément porteur 4 central du type élément de renforcement en fibres plastiques (FRP) s'étendant à l'intérieur de l'enveloppe de protection 2.

Cette position centrale améliore la compacité du câble optique et facilite l'organisation des modules principaux autour dudit élément porteur.

Dans un autre mode de réalisation non représenté, l'élément porteur n'est pas nécessairement au centre du câble optique.

Ainsi, plusieurs entités comprenant des modules principaux de fibres optiques associés à un élément porteur peuvent s'étendre à l'intérieur de l'enveloppe de protection du câble optique.

La fonction essentielle de l'élément porteur 4 est d'organiser à sa périphérie les différents modules principaux de fibres optiques.

Comme représenté sur la figure 2, chaque tube 3 est en contact avec la surface externe de l'élément porteur 4 et est maintenu par la couche de protection 2.

Bien entendu, tous les tubes ne sont pas nécessairement en contact avec l'élément porteur et avec l'enveloppe de protection 2, notamment sa surface interne.

Ils peuvent être en effet soit en contact avec l'élément porteur 4, soit en contact avec la surface interne de l'enveloppe de protection 2.

Il est seulement essentiel que les tubes 3 soient intercalés entre la couche de protection 2 et l'élément porteur 4 afin de les immobiliser.

L'enroulement des tubes autour de l'élément porteur est de préférence un toronnage de type S-Z, ce qui permet d'avoir un accès facilité de chaque tube lors de l'extraction des modules principaux de fibres optiques.

Ce type d'enroulement est effectué alternativement par sections de tubes de longueurs successives, avec un toronnage à gauche (toronnage S) et un toronnage à droite (toronnage Z).

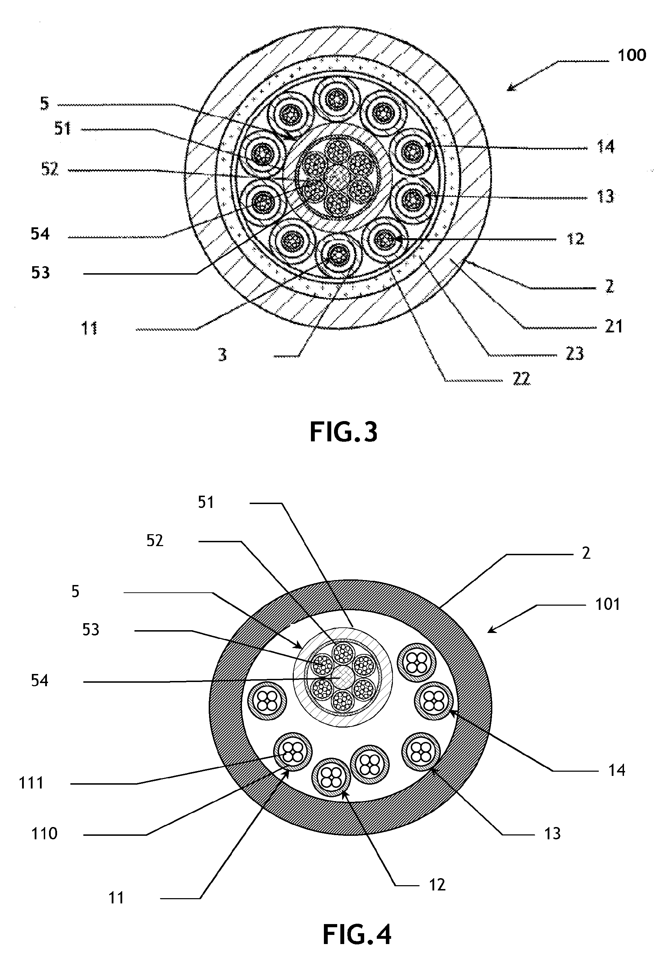

La figure 3 représente la vue en coupe d'un câble optique 100 selon un autre mode de réalisation particulier de la présente invention.

Notamment, elle présente une variante possible de l'enveloppe de protection ainsi que de l'élément porteur, les autres éléments constitutifs du câble optique 100 restant identiques à ceux décrits sur la figure 2.

Comme représenté sur la figure 3, l'enveloppe de protection 2 dudit câble optique 100 est constituée d'une couche externe 21 et d'une couche interne 22.

La couche externe 21 est par exemple en polyéthylène haute densité et la couche interne 22 est un ensemble de mèches de maintien en polyester par exemple.

Une couche intermédiaire 23 du type armure en acier corrugué est intercalée entre la couche externe 21 et la couche interne 22.

L'élément porteur est lui-même un câble optique interne 5. Ledit câble optique interne 5 n'est pas nécessairement utilisé pour la distribution d'informations à des points d'alimentations, ou en d'autres termes n'est pas nécessairement utilisé pour être extrait sur de grandes longueurs à des fins de raccordement auxdits points.

Les différents tubes 3 sont maintenus entre la couche externe 51 de protection dudit câble optique interne 5 et la couche interne 22 de l'enveloppe de protection 2.

Ce câble optique interne 5 comprend en outre plusieurs modules internes 52 de fibres optiques, chaque module interne comprenant une pluralité de fibres optiques 53.

Les éléments constitutifs de chaque module interne peuvent avantageusement être identiques aux éléments constitutifs du module principal.

Ledit câble optique interne 5 comprend également un élément central rigide 54 s'étendant à l'intérieur dudit câble optique interne 5.

La couche externe 51 entoure l'ensemble des modules internes 52 et l'élément central rigide 54 et peut être réalisé en un matériau du même type que celui utilisé pour l'enveloppe de protection 2.

La figure 4 représente la vue en coupe d'un câble optique 101 selon un autre mode de réalisation particulier de la présente invention.

Identiquement aux figures 2 et 3 précédemment décrite, le câble optique 101 comprend des modules principaux 11, 12, 13, 14 de fibres optiques, l'ensemble desdits modules principaux étant entouré par une enveloppe de protection 2 entourant lesdits modules principaux de fibres optiques.

Chaque module principal comprend une gaine externe 110 entourant des fibres optiques 111, chaque module principal étant tel que décrit précédemment dans la présente invention.

Ladite gaine externe 110 peut être formée en un matériau présentant un faible coefficient de frottement dynamique tel que décrit dans le document FR2887639.

Le câble optique 101 comprend en outre un câble optique interne 5 à l'intérieur de ladite enveloppe de protection 2, ledit câble optique interne 5 étant tel que décrit précédemment en relation avec la figure 3.

Ledit câble optique interne 5 comprend au moins un module interne 52 de fibres optiques 53.

Au moins un module interne 52 de fibres optiques du câble optique interne 5 est connecté à au moins un des modules principaux 11, 12, 13, 14 de fibres optiques du câble optique 101.

Les modules principaux 11, 12, 13, 14 de fibres optiques sont typiquement agencés à l'intérieur de l'enveloppe de protection 2 de manière à ce qu'ils disposent d'un jeu suffisant destiné à faciliter leur extraction.

Le jeu est tel que l'aire de la somme des sections de l'ensemble des modules principaux de fibres optiques contenus dans l'enveloppe de protection 2 et du câble optique interne 5 est inférieure à 80% de l'aire de la section de la surface interne de l'enveloppe de protection 2.

Ces caractéristiques permettent préférentiellement de faciliter l'extraction de chaque module principal 11, 12, 13, 14 du câble optique 101 et le poussage du module principal dans une microconduite jusqu'au point de connexion sur une grande longueur.

Les techniques utilisées pour les extractions et les raccordements desdits modules principaux pouvant être celles décrites dans le document FR2887639.

Le nombre de modules principaux et/ou internes 11, 12, 13, 14, 52 ainsi que le nombre de fibres optiques 111, 53 représentés sur les figures 2, 3 et 4 ne sont bien entendu nullement limitatifs.

Le procédé de raccordement préféré au moyen du câble optique selon la présente invention est du type procédé dit de « piquage » tel que décrit dans le document brevet FR2887639.

Dans une première étape, on pratique une première ouverture dans l'enveloppe de protection 2 au niveau d'une première zone à l'aide d'un outil dédié.

Cette ouverture permet d'accéder aux tubes 3 contenus à l'intérieur de l'enveloppe de protection 2.

On sélectionne l'un des tubes 3 contenant un module principal 11, ledit module principal étant celui que l'on souhaite dévier vers un point d'alimentation.

On sectionne le tube 3 du module principal 11 à proximité de la première ouverture du câble optique 10, 100 pour accéder audit module principal.

Dans une seconde étape, on pratique une deuxième ouverture dans l'enveloppe de protection 2 au niveau d'une deuxième zone à l'aide d'un outil dédié.

On sectionne le tube du module principal 11 à proximité de la deuxième zone du câble optique pour accéder audit module principal 11, la deuxième zone étant distante de la première zone.

La distance entre la première zone et la deuxième zone le long du câble optique 10, 100 est typiquement comprise entre quelques mètres et quelques dizaines de mètres, mais peut atteindre une centaine de mètres.

Dans une troisième étape, on tire le module principal 11 au niveau de la deuxième zone de manière à extraire la portion sectionnée dudit module principal.

L'extraction de ladite portion du module principal 11 au niveau de la deuxième zone du câble s'effectue avantageusement en injectant un flux d'air, à partir de la première zone de section du tube 3, à l'intérieur dudit tube.

Dans une quatrième étape, on raccorde un point d'alimentation au câble optique 10, 100 par l'intermédiaire de la portion de module principal extraite.

En appliquant le procédé dit de piquage au câble optique 100 ou 101 représenté respectivement sur les figures 3 et 4, le câble optique interne 5 permet avantageusement d'alimenter les modules principaux de fibres optiques afin de réaliser deux opérations de raccordement sur une portion différente d'un même module principal de fibres optiques.

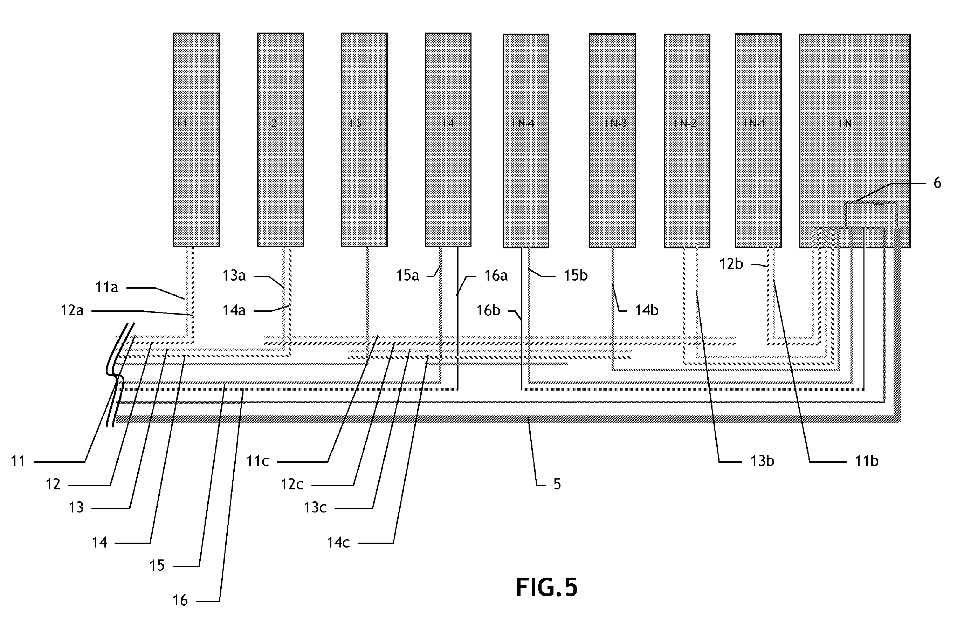

Cette double utilisation d'un module principal de fibres optiques est réalisable lorsque, à une extrémité du câble optique 100, 101, les modules internes 52 du câble optique interne 5 sont connectés aux modules principaux de fibres optiques du câble optique 100, 101 par un moyen de connexion 6 tel que représenté sur la figure 5 pour former une boucle de connexion.

En d'autres termes et de manière plus générale, au moins une fibre optique 53 d'un module interne 52 du câble optique interne 5 est connectée à une fibre optique 111 d'un module principal 11, 12, 13, 14 du câble optique 100, 101.

La figure 5 représente schématiquement un exemple de raccordement de différents modules principaux 11 à 16 à N immeubles I1 à IN.

Des premières opérations de raccordement, effectuées par le procédé de piquage tel que décrit précédemment, permettent de connecter une portion 11a du module principal 11 à l'immeuble I1, de connecter une portion 12a du module principal 12 à l'immeuble I1, de connecter une portion 13a du module principal 13 à l'immeuble I2, de connecter une portion 14a du module principal 14 à l'immeuble I2, de connecter une portion 15a du module principal 15 à l'immeuble I4, et de connecter une portion 16a du module principal 16 à l'immeuble I4.

Grâce au bouclage, par le moyen de connexion 6, entre le câble optique interne 5 et les modules principaux 11 à 16 dans l'immeuble N, des secondes opérations de raccordement peuvent également être réalisées par piquage sur d'autres portions des mêmes modules principaux 11 à 16.

Ainsi, les secondes opérations de raccordement permettent de connecter une autre portion 11 b du module principal 11 à l'immeuble IN-1, de connecter une autre portion 12b du module principal 12 à l'immeuble IN-1, de connecter une autre portion 13b du module principal 13 à l'immeuble IN-2, de connecter une autre portion 14b du module principal 14 à l'immeuble IN-2, de connecter une autre portion 15b du module principal 15 à l'immeuble IN-4, et de connecter une autre portion 16b du module principal 16 à l'immeuble IN-4.

Les portions non utilisées 11c, 12c, 13c, 14c des modules principaux 11, 12, 13, 14 pour le raccordement restent à l'intérieur du câble optique 100, 101.

Ce bouclage d'extrémité permet de manière particulièrement avantageuse, pour un nombre x d'opérations de raccordement, d'utiliser seulement x/2 modules principaux de fibres optiques.

Le nombre total de modules principaux de fibres optiques entre le câble optique interne et l'enveloppe de protection s'en trouve ainsi limité de façon significative.

Typiquement, l'extrémité du câble optique opposée au bouclage, c'est-à-dire l'extrémité d'où partent les modules 11 à 16 du côté de l'immeuble I 1, est connectée par exemple à un point dit de présence d'alimentation du câble optique, non représenté sur la figure 5.

Ce point de présence est bien connu de l'homme du métier et permet le raccordement dudit câble optique pour l'alimenter optiquement.

## Revendications

1. Câble optique (100,101) comprenant :
- un ou des modules principaux (11, 12, 13, 14) de fibres optiques comprenant des fibres optiques (111) et une gaine externe (110), les fibres optiques de chaque module principal étant entourées par ladite gaine externe (110), et
- une enveloppe de protection (2) entourant le ou lesdits modules principaux de fibres optiques,
le câble optique (100,101) comprenant en outre un câble optique interne (5) à l'intérieur de ladite enveloppe de protection (2), ledit câble optique interne (5) comprenant au moins un module interne (52) de fibres optiques (53) et une couche externe (51) entourant le ou les module(s) interne(s) (52), et au moins un module interne (52) de fibres optiques du câble optique interne (5) étant connecté à au moins un des modules principaux (11, 12, 13, 14) de fibres optiques du câble optique (100, 101).

2. Câble optique selon la revendication 1, **caractérisé en ce qu'**il comprend en outre :
- n modules principaux (11, 12, 13, 14) de fibres optiques, n étant un entier tel que 1 ≤ n ≤ 3, disposés à l'intérieur d'un tube (3) qui leur est propre, lesdits n modules principaux étant libres à l'intérieur dudit tube (3), et
- un élément porteur (4) à l'intérieur de ladite enveloppe de protection (2), chacun desdits tubes (3) étant immobilisé entre ledit élément porteur (4) et ladite enveloppe de protection (2).

3. Câble selon la revendication 2, **caractérisé en ce que** n est égal à 1.

4. Câble selon la revendication 2 ou 3, **caractérisé en ce que** l'aire de section des n modules principaux (11, 12, 13, 14) est inférieure à 80% de l'aire de la section de la surface interne du tube (3).

5. Câble selon l'une quelconque des revendications 2 à 4, **caractérisé en ce que** le ou les tubes (3) sont toronnés autour de l'élément porteur (4).

6. Câble selon la revendication 5, **caractérisé en ce que** la configuration du ou des tubes (3) autour de l'élément porteur (4) est de type S-Z.

7. Câble selon l'une quelconque des revendications 2 à 6, **caractérisé en ce que** l'élément porteur (4) est un élément de renforcement.

8. Câble selon l'une quelconque des revendications 2 à 6, **caractérisé en ce que** l'élément porteur (4) est ledit câble optique interne (5).

9. Câble selon l'une quelconque des revendications 2 à 8, **caractérisé en ce que** le tube (3) est composé d'un polybutylène téréphthalate (PBT) et d'un polycarbonate (PC).

10. Câble selon l'une quelconque des revendications 2 à 9, caractérisé en ce le tube (3) est composé d'un agent colorant.

11. Câble selon l'une quelconque des revendications précédentes, **caractérisé en ce que** la gaine externe (110) est composée d'un matériau polymère chargé.

12. Câble selon l'une quelconque des revendications précédentes, **caractérisé en ce que** l'enveloppe de protection (2) comprend une couche externe (21) et une couche interne (22).

13. Câble selon la revendication 12, **caractérisé en ce que** la couche externe (21) se compose d'un polyéthylène haute densité et la couche interne (22) se compose de mèches de maintien.

14. Câble selon la revendication 12 ou 13, **caractérisé en ce qu'**une couche intermédiaire (23) de type armure est intercalée entre la couche externe (21) et la couche interne (22).

15. Procédé de raccordement au moyen d'un câble optique tel que défini aux revendications 1 à 14, comprenant les étapes suivantes :
- sélectionner un tube du câble optique et le sectionner au niveau d'une première zone dudit câble, puis sectionner un module principal dudit tube au niveau de la première zone,
- sectionner ledit tube au niveau d'une deuxième zone du câble, la deuxième zone étant distante de la première zone,
- extraire, au niveau de la deuxième zone, la portion sectionnée du module principal du tube qui lui est propre par soufflage, et
- raccorder un point d'alimentation au câble optique par l'intermédiaire de la portion de module principal extraite.

16. Procédé selon la revendication 15, **caractérisé en ce que** l'extraction dudit module principal du tube qui lui est propre est effectuée par injection d'un flux d'air à partir de la première zone de section du tube.

17. Procédé selon la revendication 15 ou 16, **caractérisé en ce qu'**il comprend une étape consistant à pratiquer une ouverture dans l'enveloppe de protection au niveau de la première et/ou de la deuxième zone.

## Patentansprüche

1. Optisches Kabel (100, 101), das umfasst:
- ein Hauptmodul oder Hauptmodule (11, 12, 13, 14) optischer Fasern, die optische Fasern (111) und einen äußeren Mantel (110) umfassen, wobei die optischen Fasern jedes Hauptmoduls von dem äußeren Mantel (110) umgeben sind, und
- eine Schutzhülle (2), die das Hauptmodul oder die Hauptmodule optischer Fasern umgibt,
wobei das optische Kabel (100, 101) ferner ein inneres optisches Kabel (5) in der Schutzhülle (2) umfasst, wobei das innere optische Kabel (5) mindestens ein inneres Modul (52) optischer Fasern (53) und eine äußere Schicht (51), die das oder die internen Module (52) umgibt, umfasst und mindestens ein inneres Modul (52) optischer Fasern des inneren optischen Kabels (5) mit mindestens einem der Hauptmodule (11, 12, 13, 14) optischer Fasern des optischen Kabels (100, 101) verbunden ist.

2. Optisches Kabel nach Anspruch 1,**dadurch gekennzeichnet, dass** es ferner umfasst:
- n Hauptmodule (11, 12, 13, 14) optischer Fasern, wobei n eine Ganzzahl wie 1 ≤ n ≤ 3 ist, die in einem ihnen eigenen Schlauch (3) angeordnet sind, wobei die n Hauptmodule in diesem Schlauch (3) frei sind, und
- ein tragendes Element (4) in der Schutzhülle (2),
wobei jeder der Schläuche (3) zwischen dem tragenden Element (4) und der Schutzhülle (2) blockiert ist.

3. Kabel nach Anspruch 2, **dadurch gekennzeichnet, dass** n gleich 1 ist.

4. Kabel nach Anspruch 2 oder 3, **dadurch gekennzeichnet, dass** die Querschnittsfläche der n Hauptmodule (11, 12, 13, 14) kleiner als 80 % der Querschnittsfläche der inneren Fläche des Schlauchs (3) ist.

5. Kabel nach einem der Ansprüche 2 bis 4, **dadurch gekennzeichnet, dass** der oder die Schläuche (3) um das tragende Element (4) verdrillt sind.

6. Kabel nach Anspruch 5, **dadurch gekennzeichnet, dass** die Konfiguration des oder der Schläuche (3) um das tragende Element (4) vom Typ S-Z ist.

7. Kabel nach einem der Ansprüche 2 bis 6, **dadurch gekennzeichnet, dass** das tragende Element (4) ein Verstärkungselement ist.

8. Kabel nach einem der Ansprüche 2 bis 6, **dadurch gekennzeichnet, dass** das tragende Element (4) das innere optische Kabel (5) ist.

9. Kabel nach einem der Ansprüche 2 bis 8, **dadurch gekennzeichnet, dass** der Schlauch (3) aus einem Polybutylenterephthalat (PBT) und einem Polycarbonat (PC) zusammengesetzt ist.

10. Kabel nach einem der Ansprüche 2 bis 9, **dadurch gekennzeichnet, dass** der Schlauch (3) aus einem Farbstoff zusammengesetzt ist.

11. Kabel nach einem der vorangehenden Ansprüche, **dadurch gekennzeichnet, dass** der äußere Mantel (110) aus einem chargierten Polymermaterial zusammengesetzt ist.

12. Kabel nach einem der vorangehenden Ansprüche, **dadurch gekennzeichnet, dass** die Schutzhülle (2) eine äußere Schicht (21) und eine innere Schicht (22) umfasst.

13. Kabel nach Anspruch 12, **dadurch gekennzeichnet, dass** sich die äußere Schicht (21) aus einem hochdichten Polyethylen zusammensetzt und sich die innere Schicht (22) aus Stützfasern zusammensetzt.

14. Kabel nach Anspruch 12 oder 13, **dadurch gekennzeichnet, dass** eine Zwischenschicht (23) vom Typ Armierung zwischen der äußeren Schicht (21) und der inneren Schicht (22) zwischengestellt ist.

15. Anschlussverfahren mittels eines optischen Kabels nach den Ansprüchen 1 bis 14, das die folgenden Schritte umfasst:
- Auswählen eines Schlauchs des optischen Kabels und sein Trennen auf Ebene einer ersten Zone des Kabels, danach Trennen eines Hauptmoduls des Schlauchs auf Ebene der ersten Zone,
- Trennen des Schlauchs auf Ebene einer zweiten Zone des Kabels, wobei die zweite Zone von der ersten Zone beabstandet ist,
- Extrahieren, auf Ebene der zweiten Zone, des getrennten Abschnitts des schlaucheigenen Hauptmoduls durch Blasen, und
- Anschließen eines Versorgungspunkts an das optische Kabel mit Hilfe des extrahierten Abschnitts des Hauptmoduls.

16. Verfahren nach Anspruch 15, **dadurch gekennzeichnet, dass** die Extraktion des schlaucheigenen Hauptmoduls durch Einspritzen eines Luftstroms ab der ersten Trennzone des Schlauchs erfolgt.

17. Verfahren nach Anspruch 15 oder 16, **dadurch gekennzeichnet, dass** es einen Schritt umfasst, der darin besteht, in die Schutzhülle eine Öffnung auf Ebene der ersten und/oder der zweiten Zone einzuarbeiten.

## Claims

1. An optical cable (100, 101) comprising:
- one or more main modules (11, 12, 13, 14) of optical fibers comprising optical fibers (111) and an outer sheath (110), the optical fibers of each main module being surrounded by said outer sheath (110), and
- a protective enclosure (2) surrounding said main optical fiber module(s),
the optical cable (100, 101) further comprising an inner optical cable (5) inside said protective enclosure (2), said inner optical cable (5) comprising at least one inner module (52) of optical fibers (53) and an outer layer (51) surrounding said inner module(s) (52), and at least one inner module (52) of optical fibers of the inner optical cable (5) being connected to at least one of the main modules (11, 12, 13, 14) of optical fibers of the optical cable (100, 101).

2. The optical cable according to claim 1, **characterized in that** it further comprises:
- n main modules (11, 12, 13, 14) of optical fibers, n being an integer such that 1 ≤ n ≤ 3, positioned inside a tube (3) specific to them, said n main modules being free inside said tube (3), and
- a support element (4) inside said protective enclosure (2),
each of said tubes (3) being immobilized between said first support (4) and said protective enclosure (2).

3. The cable according to claim 2, **characterized in that** n is equal to 1.

4. The cable according to claim 2 or 3, **characterized in that** the section area of the n main modules (11, 12, 13, 14) is less than 80% of the area of the inner surface section of the tube (3).

5. The cable according to any one of claims 2 to 4, **characterized in that** the tube(s) (3) are stranded around the support element (4).

6. The cable according to claim 5, **characterized in that** the configuration of the tube(s) (3) around the support element (4) is of the S-Z type.

7. The cable according to any one of claims 2 to 6, **characterized in that** the support element (4) is a reinforcing element.

8. The cable according to any one of claims 2 to 6, **characterized in that** the support element (4) is said inner optical cable (5).

9. The cable according to any one of claims 2 to 8, **characterized in that** the tube (3) is made up of a polybutylene terephthalate (PBT) and a polycarbonate (PC).

10. The cable according to any one of claims 2 to 9, **characterized in that** the tube (3) is made up of a coloring agent.

11. The cable according to any one of the preceding claims, **characterized in that** the outer sheath (110) is made up of a filled polymer material.

12. The cable according to any one of the preceding claims, **characterized in that** the protective enclosure (2) comprises an outer layer (21) and an inner layer (22).

13. The cable according to claim 12, **characterized in that** the outer layer (21) is made up of a high-density polyethylene and the inner layer (22) is made up of maintaining wicks.

14. The cable according to claim 12 or 13, **characterized in that** an intermediate layer (23) of the armor type is inserted between the outer layer (21) and the inner layer (22).

15. A connection method using an optical cable as defined in claims 1 to 14, comprising the following steps:
- selecting a tube of the optical cable and sectioning it at a first zone of said cable, then sectioning a main module of said tube at the first zone,
- sectioning said tube at a second zone of the cable, the second zone being remote from the first zone,
- removing, at the second zone, the sectioned portion of the main module from the tube specific to it by blowing, and
- connecting a power supply point to the optical cable using the removed main module portion.

16. The method according to claim 15, **characterized in that** the removal of said main module from the tube specific to it is done by injecting a flow of air from the first section zone of the tube.

17. The method according to claim 15 or 16, **characterized in that** it comprises a step consisting of forming an opening in the protective enclosure at the first and/or second zone.
